# EUROPEAN PATENT SPECIFICATION

(11) **EP 1 665 629 B1**
(45) Date of publication and mention of the grant of the patent: **03.12.2008**
(21) Application number: 04766584.9
(22) Date of filing: 24.08.2004
(51) Int. Cl.: H04L 12/14

(54) **Charging for multimedia services**
Berechnen von Gebühren für Miltimedia-Dienste
Facturation de services multimédia

(30) Priority: 12.09.2003 GB 0321416
(43) Date of publication of application: 07.06.2006
(73) Proprietor: TELEFONAKTIEBOLAGET LM ERICSSON (publ), 164 83 Stockholm (SE)
(72) Inventor: BELLORA, Mauro, I-21013 Gallarate (Varese) (IT); DI PASQUALE, Gianluca, I-20151 Milano (IT); DOTTI, Chiara, I-20144 Milan (IT); ERIKSSON, Göran, S-172 38 Sundbyberg (SE); EDLUND, Christer, S-141 49 Huddinge (SE)
(74) Representative: Lind, Robert
(86) International application number: PCT/EP2004/051888
(87) International publication number: WO 2005/027408

(56) References cited:
- 3GPP: "3GPP TR 23.825 V1.0.0 (2003-09) 3rd Generation Partnership Project; Technical Specification Group Services and System Aspects; Overall Architecture Aspects of IP Flow Based Bearer Level Charging; Stage 2 (Release 6)" ONLINE, [Online] 10 September 2003 (2003-09-10), pages 1-18, XP002309913 Retrieved from the Internet: URL:http://www.3gpp.org/ftp/Specs/archive/ 23_series/23.825/23825-100.zip> [retrieved on 2004-12-09]
- GRAYSON M: "Diameter NASREQ Extensions for the Delivery of Service-Flow Charging Rules" ONLINE, [Online] June 2003 (2003-06), pages 1-18, XP002309914 Retrieved from the Internet: URL:http://www.watersprings.org/pub/id/dra ft-grayson-aaa-serviceflows-00.txt> [retrieved on 2004-12-09]
- 3GPP: "3GPP TS 32.225 V5.3.0 (2003-06) 3rd Generation Partnership Project; Technical Specification Group Service and System Aspects; Telecommunication management; Charging management; Charging data description for the IP Multimedia Subsystem (IMS) (Release 5)" ONLINE, [Online] 26 June 2003 (2003-06-26), XP002309915 Retrieved from the Internet: URL:http://www.3gpp.org/ftp/Specs/archive/ 32_series/32.225/32225-530.zip> [retrieved on 2004-12-09]

## Description

### Field of the Invention

The present invention relates to a method and apparatus for charging for multimedia services provided to users of a wireless communication network and in particular to combinational IP multimedia services, which make use of packet switched and circuit switched connections.

### Background to the Invention

IP Multimedia (IPMM) services provide a dynamic combination of voice, video, messaging, data, etc. within the same session. By growing the numbers of basic applications and the media which it is possible to combine, the number of services offered to the end users will grow, and the inter-personal communication experience will be enriched. This will lead to a new generation of personalized, rich multimedia communication services, including so-called "combinational IP Multimedia" services which are considered in more detail below.

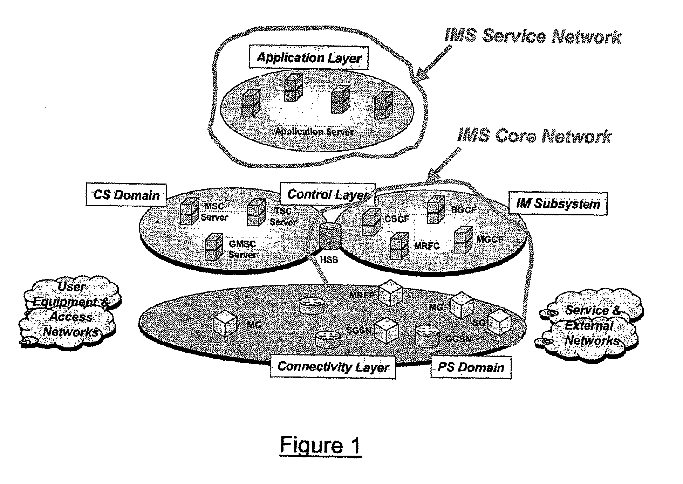

IP Multimedia Subsystem (IMS) is the technology defined by the Third Generation Partnership Project (3GPP) to provide IP Multimedia services over 3G mobile communication networks (3GPP TS 23.228 and TS 24.229 Release 5 and Release 6). IMS provides key features to enrich the end-user person-to-person communication experience through the integration and interaction of services. IMS allows new rich person-to-person (client-to-client) as well as person-to-content (client-to-server) communications over an IP-based network. The IMS makes use of the Session Initiation Protocol (SIP) to set up and control calls or sessions between user terminals (or user terminals and web servers). The Session Description Protocol (SDP), carried by SIP signaling, is used to describe and negotiate the media components of the session. Others protocols are used for media transmission and control, such as Real-time Transport Protocol/Real-time Transport Control Protocol (RTP/RTCP), Message Session Relay Protocol (MSRP), Hyper Text Transfer Protocol (HTTP). IMS requires an access network which would typically be a 2G/3G General Packet Radio Service (GPRS) / Packet Switched (PS) network, but which might be some other access network such as fixed broadband or WiFi. Figure 1 illustrates schematically how the IMS fits into the mobile network architecture in the case of a GPRS access network.

An example of a combinational IP Multimedia service is a multimedia service that includes and combines both a Circuit Switched media (such as voice) and a Packet Switched media over the IP Multimedia domain (such as pictures, video, presence, instant messages, etc.). A service referred to here as "WeShare" combines the full IP Multimedia Subsystem (IMS) benefits of a multimedia service with CS voice. The service enables an end-user during a (full-duplex) Circuit Switched (CS) voice conversation to immediately share content with another end-user. Such contents may include (but is not limited to):
- a picture taken during the conversation with the terminal's inbuilt camera, or a pre-store picture (WeShare Image service);
- a one-way live video of, for example, the immediate physical surroundings, captured during the conversation with the terminal's inbuilt camera (WeShare Motion/Clip service);
- a pre-stored video clip with a sequence recorded previously, or a clip downloaded from the Web (WeShare Motion/Video service).

Either party in the conversation may initiate transmission of content to the other party.

The charging model for WeShare services must be fair and easy to understand for the user/subscriber if the market take-up of the services is to be high. Subscriber charges for WeShare will likely be based on a combination of:
- Standard CS voice charging (i.e. typically time-based);
- The actual content shared by means of the IMS. For example, for the WeShare Image service, content charging could be on a per image basis (i.e. event-based); for the WeShare Motion/Clip service, content charging could be on a per clip basis (i.e. event-based); for the WeShare Motion/Video service, content charging could be on a per video basis (i.e. event-based) or on a video-duration basis (i.e. time-based).

Volume based charging (i.e. per Kbits), i.e. PS bearer-level charging, should not apply to WeShare services as this is likely to lead to confusion amongst subscribers. In other words, PS bearer-level charging should be zero-rated (disabled) for IMS-based WeShare services. Content charging for WeShare services should occur at the IMS layer, with the Charging System using charging data (CDR or accounting information) provided by IMS nodes. In order to eliminate PS bearer-level charging for WeShare services, PS bearer-level and IMS session-level charging correlation must be achieved.

3GPP has currently identified three mechanisms for differentiating charging in PS-based and IMS-based networks (3GPP TS 32.335 V5.3.0 and 3GPP TR 23.825 V1.0.0). These are:
- APN (Access Point Name);
- The Go interface (between P-CSCF/PCF and GGSN) to correlate PS bearer-level and IMS session-level charging; and
- IP-flow bearer level charging (a.k.a. Flow Based Charging) with dynamic filters, to intercept and (zero) rate in the PS domain the user-to-user (user-plane) traffic associated with or related to the IMS session.

Unfortunately, none of these mechanisms is applicable to the early IMS deployment and as such to WeShare services.

With the APN approach, in order to simplify terminals and network configurations, most network operators want to use only one APN for all PS-based services. Thus, the same GPRS/PS PDP context would be used to carry IMS signaling traffic, IMS user-plane traffic, IMS-related end-user management traffic (e.g. HTTP-based traffic for end-user management of contact-list and other user information in the SIP Application Sever), and traffic related to any other PS-based services such as WAP/web browsing, e-mail, MMS, etc. Even if operators are willing to introduce a dedicated APN for IMS services, there may be other, non-WeShare IMS services where both PS bearer-level and IMS-session level charging could be needed to determine the IMS service charging.

With the Go interface, charging correlation is achieved by means of GPRS Charging IDs (related to a given PDP context) and IMS Charging IDs (related to a given IMS/SIP session) exchanged between the PS layer (GGSN) and the IMS layer (P-CSCF/PCF). The Go interface only works when two or more PDP contexts (one primary and one or more secondary PDP contexts), i.e. two or more PS RABs, are used, while only one PS RAB is available for early IMS deployment. In fact, once a GPRS Charging ID has been linked to an IMS Charging ID for the purpose of disabling, at the Charging System, the PS charging input (CDRs or accounting information), then all traffic using that PDP context will not be charged for: this may include traffic related to PS-based services such as WAP/web browsing, e-mail, etc, which operators will want to charge for.

The IP-flow bearer level charging with dynamic filters is in an early standardization phase, and as such will not be available for early WeShare services deployment. 3GPP TR 23.825 describes IP-flow bearer level charging based on a source or destination IP address/port number. It is assumed that a charging node is aware of the IP addresses and port numbers of all source and destination nodes for which charging is required. This approach is not practical, for example for a user-to-user service where the destination and/or source IP address/port number is not known a priori.

Grayson, "Diameter NASREQ Extensions for the Delivery of Service-Flow Charging Rules", draft-grayson-aaa-serviceflows-00.txt describes service flow charging rules in a telecommunications network which is based on a source or destination IP address/port number.

In summary, the problem with the existing technology is how to "zero-out" (zero-rate) the PS bearer-level charging for the IMS-based WeShare related traffic (both signaling and user-plane), whilst still allowing PS bearer-level charging for other PS-based related traffic, while the same APN (and GPRS/PS PDP Context) is used for both IMS and other PS-based traffic.

### Summary of the Present Invention

According to the present invention there is provided a method of charging for a multimedia service provided over an IP Multimedia Subsystem, IMS, responsible for providing and managing packet switched services, the method comprising: sending packet switched data generated by a user terminal, from a gateway node of a packet switched access network to an IP destination node, via an intermediate node having an IP address/port-number known a priori; and
configuring a charging function associated with said gateway node or a further gateway node in the transmission path to zero-rate data on the basis of the inclusion of said known IP address/port number in the destination or source address fields of data packets.

Typically, said charging function generates charging data for transmission to a charging system responsible for debiting/crediting subscriber accounts. The charging system also receives charging data from charging functions provided at nodes of the IMS.

Preferably, said multimedia service involves at least two user terminals, a gateway node associated with each user terminal, and, provided between the gateway nodes, an intermediate node having a known IP address/port number.

Said packet switched data may be SIP signalling data, user-plane data, or end-user management data. In the case of user-plane data (media and media control signalling), said node may be a Media Resource Function Processor (MRFP) node or an Message Session Relay Protocol (MSRP) Relay/End-point node. In the case of SIP signalling data, said node may be a Proxy-Call Session Control Function (P-CSCF) node of the IMS. In the case of end-user management data, said node may be an Application Server.

In certain embodiments of the present invention, said packet switched access network is a General Packet Radio Service (GPRS) network, and said gateway nodes are a Gateway GPRS Support Nodes (GGSN)s. Both or all user terminals may use GPRS networks to access the packet switched services. Said charging function may be implemented at the GGSN or at a standalone node coupled to the GGSN.

Preferably, said charging function is arranged to store said known IP address/port-number and to compare this IP address/port-number with the source and/or destination IP address/port-number of the packets passing through the gateway node. Said charging function may perform storing and matching on additional fields of a packet.

The method may comprise:
storing at the charging function a set of IP addresses/port-numbers being known a priori, the IP addresses/port-numbers being allocated to one or more nodes of the IP Multimedia Service core network;
filtering IP packets to determine whether the source and/or destination IP address/port-numbers of a packet matches one of the stored addresses/port-numbers; and
zero-rating traffic for which a match is found otherwise applying the usual charging rules.

The charging function may be implemented at the gateway node, e.g. a GGSN, or at a standalone node coupled to the gateway node.

### Brief Description of the Drawings

Figure 1 illustrates schematically a network architecture including an IMS core network;
Figure 2 illustrates schematically an architecture for zero-rating PS bearer-level charging in the case of an WeShare service: and
Figure 3 illustrates schematically an alternative architecture for zero-rating PS bearer-level charging in the case of an WeShare service.

### Detailed Description of Certain Embodiments of the Invention

The set of services referred to here as "WeShare" has been described above, and that term is used here by way of example. Of course the inventive principles identified can be applied to other combinational multimedia services, which may be known by some other name.

It is proposed here to share content (image, clip, video, etc.) between the parties engaged in a WeShare service session by directing the content through an intermediate network node which handles user-plane traffic. The intermediate node behaves as a bridge between the two users sharing content: that is the node shall take the media content from a first of the terminals, user agent (UA) A, and transfer it to the second terminal, user agent (UA) B, and *vice versa.* In this example, the transfer node is a Media Resource Function (MRF), specifically a Media Resource Function Processor (MRFP) controlled by a Media Resource Function Controller (MRFC). The MSRP protocol is set out in "IETF draft-ietf simple-message-sessions-07" and "IETF draft-ietf-simple-msrp-relay-01".

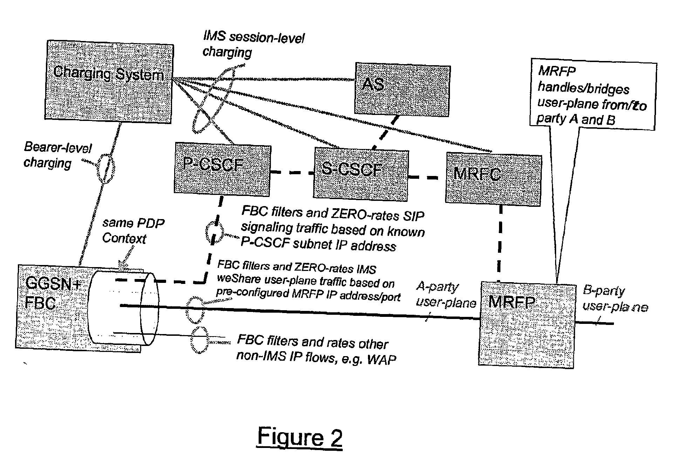

This architecture is illustrated in Figure 2, where the MRFC communicates with Charging System. The MRF is selected from a pool of MRFs each of which is allocated a (set of) static IP address/port-number, and all user plane traffic associated with the WeShare service is "forced" through the selected MRF. Also illustrated in Figure 1 are the P-CSCF and S-CSCF, as well as a SIP AS. (The SIP-AS may be required to provide the logic for including the MRF in the user-plane path.)

A GPRS Gateway Support Node (GGSN) provides a gateway between the packet switched access network of a first of the users (e.g. UE-A) and the IMS network. A similar gateway node (not shown in Figure 2) is provided between the access network of the other user (UE-B), and the IMS network. The GGSN communicates with the Charging System and would, in the absence of a zero-rating operation, send volume related charging information to the charging system.

It is desirable to zero-rate all traffic (SIP signalling, media control signalling, and media, and possibly contact-list/other end-user information management) associated with an IMS (WeShare) service at the packet-switched level, so that charging occurs only at the IMS layer, thus avoiding the double-charging of users for both data volume (e.g. Mbits/second) and IMS level content (e.g. pictures, video clips, etc). This traffic includes SIP signalling traffic to/from the P-CSCF, media control signalling and the actual media traffic (e.g. RTCP/RTP traffic for video; MSRP traffic for image/clip) to/from the MRF.

To achieve this zero-rating, a charging filter known as a Flexible Bearer Charging (FBC) with static filter is implemented at the GGSN (although it may be implemented as a standalone node connected to the GGSN over the "Gi" interface). The FBC static filter is configured with the P-CSCF subnet IP address/port-number (known a *priori*). All SIP signalling can be intercepted and zero-rated at this filter. In addition, the filter is configured with the MRF subnet IP address/port-number (also known a *priori*), allowing all IMS related RTPC/RTP or MSRP traffic to be intercepted and zero-rated. The filter may be further configured with the subnet IP address/port-number (known a *priori*) of the SIP-AS in charge of contact-list/other end-user information management, allowing such management traffic to be zero-rated. Further details of the FBC can be found in 3GPP TR 23.825.

The MRF (MRFP via MRFC) provides charging input (accounting information) to the charging system. Also, other IMS nodes such as the CSCFs and SIP-AS may provide charging input to the charging system, e.g. when session-time is needed for charging determination.

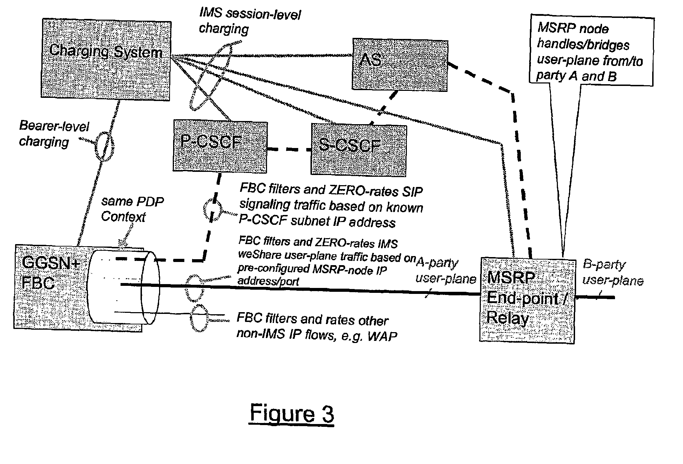

Figure 3 illustrates an alternative architecture in which the MRF is replaced by an Message Session Relay Protocol (MSRP) node, behaving as either End-point or Relay.

The described solution allows for an early deployment of IMS-based WeShare services with a suitable charging model such that the user/subscriber knows exactly what he/she is paying for, e.g. a given amount of money for each image sent when using the WeShare Image service.

Abbreviations used in this document include:
3GGP 3^{rd} Generation Partnership Project
WCDMA Wideband Code Division Multiple Access
GPRS General Packet Radio Services
3G 3^{rd} Generation Network
IMS 3GPP IP Multimedia Subsystem
IPMM IP Multimedia (IMS-based)
PS Packed Switched
CS Circuit Switched
RAB (WCDMA) Radio Access Bearer
MRF Media Resource Function
MRFCMedia Resource Function Control
MRFP Media Resource Function Processor
FBC Flexible Bearer Charging
CDR Call Detailed Record
MSRP Message Session Relay Protocol
APN Access Point Name
IP Internet Protocol
WeShare Instant Share

## Claims

1. A method of charging for a multimedia service provided over an IP Multimedia Subsystem, IMS, responsible for providing and managing packet switched services, the method comprising:
sending packet switched data generated by a user terminal, from a gateway node of a packet switched access network to an IP destination node, via an intermediate node, the intermediate node having an IP address/port-number known a priori; and
configuring a charging function associated with said gateway node or a further gateway node in the transmission path to zero-rate the packet switched data on the basis of the inclusion of said known IP address/port number in the destination or source address fields of data packets.

2. A method according to claim 1, wherein said charging function generates charging data for transmission to a charging system responsible for debiting/crediting subscriber accounts.

3. A method according to claim 1 or 2, wherein said multimedia service involves at least two user terminals, a gateway node associated with each user terminal, and, provided between the gateway nodes, said intermediate node having said known IP address/port number.

4. A method according to any one of the preceding claims, wherein said packet switched data is media and/or media control signalling and said intermediate node having said IP address/port-number known a priori is a Media Resource Function Processor node or a Message Session Relay Protocol End-point or Relay node.

5. A method according to any one of claims 1 to 3, wherein said packet switched data is signalling data and said intermediate node having said IP address/port-number known a priori is a Proxy-Call Session Control Function node.

6. A method according to claim 1 or 2, wherein said packet switched data is signalling data and said intermediate node having said IP address/port-number known a priori is a SIP Application Server for contact-list and other end-user information management.

7. A method according to any one of the preceding claims, wherein said packet switched access network is a General Packet Radio service, GPRS, network, and said each gateway node is a Gateway GPRS Support Nodes, GGSNs.

8. A method according to claim 7, wherein said charging function is implemented at the GGSN or at a standalone node coupled to the GGSN.

9. A method according to any one of the preceding claims and comprising storing said known IP address/port number at the charging function and comparing this address with the source and/or destination address/port-numbers of IP packets passing through a gateway node, and zero-rating data for which a match is found.

10. A method according to any one of the preceding claims and comprising:
storing at the charging function a set of IP addresses/port-numbers being known a priori, said IP addresses/port-numbers being allocated to one or more nodes of the IP Multimedia Service core network;
filtering IP packets to determine whether the source and/or destination address of a packet matches one of the stored addresses; and
zero-rating traffic for which a match is found otherwise applying the usual charging rules.

11. A method according to claim 10, wherein said access network is a GPRS access network, and the charging function is implemented at a GPRS Gateway Support Node or at a standalone node coupled to the GPRS Gateway Support Node.

## Patentansprüche

1. Verfahren zur Gebührenberechnung für einen Multimedia-Dienst, der über ein IP-Multimedia-Teilsystem, IMS, bereitgestellt wird, das für Bereitstellung und Verwaltung von paketvermittelten Diensten zuständig ist, wobei das Verfahren umfaßt:
Senden von paketvermittelten Daten, die durch ein Benutzerendgerät erzeugt werden, von einem Gateway-Knoten eines paketvermittelten Zugangsnetzwerks an einen IP-Zielknoten über einen Durchgangsknoten, wobei der Durchgangsknoten eine IP-Adreß/Port-Nummer hat, die a priori bekannt ist; und
Konfigurieren einer Gebührenberechnungsfunktion, die dem Gateway-Knoten oder einem weiteren Gateway-Knoten auf dem Übertragungsweg zugeordnet ist, um die paketvermittelten Daten aufgrund der Aufnahme der bekannten IP-Adreß/Port-Nummer in die Ziel- oder Quellenadreßfelder der Datenpakete gebührenfrei zu stellen.

2. Verfahren nach Anspruch 1, wobei die Gebührenberechnungsfunktion Gebührenberechnungsdaten zur Übertragung an ein Gebührenberechnungssystem erzeugt, das für Debitierung/Kreditierung von Teilnehmerkonten zuständig ist.

3. Verfahren nach Anspruch 1 oder 2, wobei der Multimedia-Dienst zumindest zwei Benutzerendgeräte, einen Gateway-Knoten, der jedem Benutzerendgerät zugeordnet ist, und, zwischen den Gateway-Knoten vorgesehen, den Durchgangsknoten mit der bekannten IP-Adreß/Port-Nummer einbezieht.

4. Verfahren nach einem der vorhergehenden Ansprüche, wobei die paketvermittelten Daten Medien-und/oder Mediensteuerzeichengabedaten sind und der Durchgangsknoten mit der IP-Adreß/Port-Nummer, die a priori bekannt ist, ein Medienressourcenfunktionsprozessorknoten oder ein Message Session Relay-Protokoll-Endpunkt oder Relay-Knoten ist.

5. Verfahren nach einem der Ansprüche 1 bis 3, wobei die paketvermittelten Daten Zeichengabedaten sind und der Durchgangsknoten mit der IP-Adreß/Port-Nummer, die a priori bekannt ist, ein Proxy-Call Session-Steuerfunktionsknoten ist.

6. Verfahren nach Anspruch 1 oder 2, wobei die paketvermittelten Daten Zeichengabedaten sind und der Durchgangsknoten mit der IP-Adreß/Port-Nummer, die a priori bekannt ist, ein SIP-Anwendungsserver für Kontaktlisten- oder andere Endbenutzerinformationsverwaltung ist.

7. Verfahren nach einem der vorhergehenden Ansprüche, wobei das paketvermittelte Zugangsnetzwerk ein Netzwerk für allgemeinen Paketfunkbetrieb, GPRS, ist und der Gateway-Knoten ein Gateway GPRS Support-Knoten, GGSN, ist.

8. Verfahren nach Anspruch 7, wobei die Gebührenberechnungsfunktion im GGSN oder in einem mit dem GGSN gekoppelten eigenständigen Knoten implementiert wird.

9. Verfahren nach einem der vorhergehenden Ansprüche und folgendes umfassend: Speichern der bekannten IP-Adreß/Port-Nummer in der Gebührenberechnungsfunktion und Vergleichen dieser Adresse mit den Quellen- und/oder Zieladreß/Port-Nummern von IP-Paketen, die durch einen Gateway-Knoten laufen, und Gebührenfreistellen von Daten, für die eine Übereinstimmung festgestellt wird.

10. Verfahren nach einem der vorhergehenden Ansprüche und folgendes umfassend:
Speichern der Gebührenberechnungsfunktion eines Satzes von IP-Adreß/Port-Nummern, die a priori bekannt sind, wobei die IP-Adreß/Port-Nummern einem oder mehreren Knoten des IP-Multimediadienst-Kernnetzwerks zugewiesen sind;
Filtern von IP-Paketen, um zu bestimmen, ob die Quellen- und/oder Zieladresse eines Pakets mit einer der gespeicherten Adressen übereinstimmt; und
Gebührenfreistellen von Verkehr, für den eine Übereinstimmung festgestellt wird, ansonsten Anwenden der üblichen Gebührenberechnungsregeln.

11. Verfahren nach Anspruch 10, wobei das Zugangsnetzwerk ein GPRS-Zugangsnetzwerk ist und die Gebührenberechnungsfunktion in einem GPRS Gateway Support-Knoten oder in einem mit dem GPRS Gateway Support-Knoten gekoppelten eigenständigen Knoten implementiert wird.

## Revendications

1. Procédé de facturation pour un service multimédia fourni via un sous-système multimédia IP, IMS, assumant la fourniture et la gestion de services commutés par paquets, le procédé comprenant:
l'envoi de données commutées par paquets générées par un terminal d'utilisateur, depuis un noeud de passerelle d'un réseau d'accès commuté par paquets jusqu'à un noeud de destination IP, via un noeud intermédiaire, le noeud intermédiaire ayant une adresse/un numéro de port IP connu(e) a priori; et
la configuration d'une fonction de facturation associée audit noeud de passerelle ou à un autre noeud de passerelle dans la voie de transmission afin de mettre à débit nul les données commutées par paquets sur la base de l'inclusion de ladite adresse/dudit numéro de port IP connu(e) dans les zones d'adresse de destination ou de source des paquets de données.

2. Procédé selon la revendication 1, dans lequel ladite fonction de facturation génère des données de facturation pour une transmission à un système de facturation assumant le débit/crédit des comptes d'abonnés.

3. Procédé selon la revendication 1 ou 2, dans lequel ledit service multimédia met en jeu au moins deux terminaux d'utilisateur, un noeud de passerelle associé à chaque terminal d'utilisateur et, prévu entre les noeuds de passerelle, ledit noeud intermédiaire ayant ladite adresse/ledit numéro de port IP connu.

4. Procédé selon l'une quelconque des revendications précédentes, dans lequel lesdites données commutées par paquets sont une signalisation de média et/ou de commande de média et ledit noeud intermédiaire qui a ladite adresse/ledit numéro de port IP connu(e) a priori est un noeud de Processeur de Fonction de Ressource Média ou un noeud de Point d'Extrémité ou de Relais de Protocole de Relais de Session de Message.

5. Procédé selon l'une quelconque des revendications 1 à 3, dans lequel lesdites données commutées par paquets sont des données de signalisation et ledit noeud intermédiaire ayant ladite adresse/ledit numéro de port IP connu(e) a priori est un noeud de Fonction de Commande de Session d'Appel Proxi.

6. Procédé selon la revendication 1 ou 2, dans lequel lesdites données commutées par paquets sont des données de signalisation et ledit noeud intermédiaire ayant ladite adresse/ledit numéro de port IP connu(e) a priori est un Serveur d'Application SIP pour une gestion de liste de contacts et toute autre gestion d'information d'utilisateur final.

7. Procédé selon l'une quelconque des revendications précédentes, dans lequel ledit réseau d'accès commuté par paquets est un réseau de Service Radio par Paquets Général, GPRS, et ledit chaque noeud de passerelle est un noeud de Support GPRS de Passerelle, GGSNs.

8. Procédé selon la revendication 7, dans lequel ladite fonction de facturation est mise en oeuvre au niveau du GGSN ou au niveau d'un noeud autonome couplé au GGSN.

9. Procédé selon l'une quelconque des revendications précédentes et comprenant le stockage de ladite adresse/dudit numéro de port IP connu(e) au niveau de la fonction de facturation et la comparaison de cette adresse avec les adresses/numéros de port de source et/ou de destination des paquets IP traversant un noeud de passerelle, et la mise à débit nul des données pour lesquelles une correspondance est trouvée.

10. Procédé selon l'une quelconque des revendications précédentes et comprenant:
le stockage au niveau de la fonction de facturation d'un jeu d'adresses/numéros de port IP qui sont connu(e)s a priori, lesdites adresses/lesdits numéros de port IP étant alloué(e)s à un ou plusieurs noeuds du réseau de noyau de Service Multimédia IP;
le filtrage des paquets IP pour déterminer si oui ou non l'adresse de source et/ou de destination d'un paquet correspond à l'une des adresses stockées; et
la mise à débit nul du trafic pour lequel une correspondance est trouvée et sinon, l'application des règles de facturation habituelles.

11. Procédé selon la revendication 10, dans lequel ledit réseau d'accès est un réseau d'accès GPRS et la fonction de facturation est mise en oeuvre au niveau d'un Noeud de Support de Passerelle GPRS ou au niveau d'un noeud autonome qui est couplé au Noeud de Support de Passerelle GPRS.
